# FASCICULE DE BREVET EUROPEEN

(11) **EP 2 318 785 B1**
(45) Date de publication et mention de la délivrance du brevet: **27.05.2015**
(21) Numéro de dépôt: 09784446.8
(22) Date de dépôt: 29.06.2009
(51) Int. Cl.: F25B 21/00, F25B 29/00

(54) **GÉNÉRATEUR THERMIQUE MAGNÉTOCALORIQUE**
MAGNETOKALORISCHER WÄRMEGENERATOR
MAGNETOCALORIC THERMAL GENERATOR

(30) Priorité: 30.06.2008 FR 0803695
(43) Date de publication de la demande: 11.05.2011
(73) Titulaire: Cooltech Applications, 67810 Holtzheim (FR)
(72) Inventeur: HEITZLER, Jean-Claude, F-68180 Horbourg Wihr (FR); MULLER, Christian, F-67000 Strasbourg (FR)
(74) Mandataire: Nithardt, Roland
(86) Numéro de dépôt international: PCT/FR2009/051256
(87) Numéro de publication internationale: WO 2010/004186

(56) Documents cités:
- FR-A- 2 562 082
- JP-A- 1 046 545
- JP-A- 2005 090 921
- JP-A- 2006 308 197
- US-A- 4 956 976
- US-A1- 2007 125 095
- OKAMURA T ET AL: "Performance of a room-temperature rotary magnetic refrigerator" INTERNATIONAL JOURNAL OF REFRIGERATION, ELSEVIER, PARIS, FR, vol. 29, no. 8, 1 décembre 2006 (2006-12-01), pages 1327-1331, XP025094679 ISSN: 0140-7007 [extrait le 2006-12-01]

## Description

### Domaine technique :

La présente invention se rapporte au domaine de la génération d'énergie thermique et concerne plus particulièrement un générateur thermique destiné à être relié à au moins une application en vue d'un échange d'énergie thermique avec cette dernière, ledit générateur comportant au moins un module thermique, ce module thermique comprenant essentiellement un élément magnétocalorique susceptible d'être traversé par un volume défini de fluide caloporteur entraîné dans le module thermique selon un déplacement alterné entre deux chambres dites chambre chaude et chambre froide disposées de part et d'autre dudit élément magnétocalorique, ledit générateur comportant également un arrangement magnétique agencé pour soumettre alternativement chaque élément magnétocalorique à une variation de champ magnétique et créer alternativement dans chaque élément magnétocalorique un cycle d'échauffement et un cycle de refroidissement, entraînant la création puis le maintien d'un gradient de température entre les deux extrémités opposées de chaque élément magnétocalorique situées au niveau des chambres, le déplacement alterné du fluide caloporteur étant synchronisé avec la variation du champ magnétique, et ledit générateur thermique comportant un moyen de transfert d'énergie thermique entre le liquide caloporteur d'au moins chaque chambre chaude et/ou d'au moins chaque chambre froide et chaque application ou l'environnement extérieur.

### Technique antérieure :

La technologie du froid magnétique est connue depuis une vingtaine d'années et on sait les avantages qu'elle apporte en termes d'écologie et de développement durable. On connaît également ses limites quant à sa puissance calorifique utile et à son rendement. Dès lors, les recherches menées dans ce domaine tendent toutes à améliorer les performances d'un tel générateur, en jouant sur les différents paramètres, tels que la puissance d'aimantation, les performances de l'élément magnétocalorique, la surface d'échange entre le fluide caloporteur et chaque élément magnétocalorique, les performances des échangeurs de chaleur, etc.

Le document US 4 829 770 décrit à cet effet un échangeur de chaleur utilisant des matériaux magnétiques. Il porte notamment sur la composition des éléments magnétocaloriques intégrés dans ce générateur. Les éléments magnétocaloriques fixes sont traversés par un gaz caloporteur, notamment de l'azote, le tout étant contenu dans un réservoir qui est animé d'un mouvement de translation alterné, synchronisé sur la variation du champ magnétique. Des échangeurs de chaleur à hélium sont connectés aux extrémités chaude et froide du réservoir pour transférer les calories et les frigories collectées à des circuits extérieurs. Pour augmenter le transfert de chaleur au niveau des extrémités chaude et froide du réservoir, ces dernières sont munies d'ailettes entraînant ainsi une augmentation de la quantité de calories et frigories pouvant être transférées par l'intermédiaire de ces échangeurs. Or, ceci peut avoir une influence négative sur le rendement du système qui va chuter si l'on prélève trop d'énergie aux réservoirs, ce qui va aboutir à un gradient de température faible et variable entre les deux extrémités chaude et froide et pouvant devenir incompatible avec les besoins thermiques de l'application. De plus, compte-tenu des très basses températures de fonctionnement, de l'ordre de -200°C, l'utilisation d'un tel générateur thermique est limitée à des applications laboratoires. En conclusion, la capacité de restitution thermique d'un tel générateur thermique est trop faible, trop variable et le comportement thermique instable de l'appareil trop dépendant des conditions de transfert de l'énergie thermique pour aboutir à une application industrielle ou domestique capable d'assurer des fonctions thermiques stables tout en pérennisant un gradient de température dans l'élément magnétocalorique.

En outre, dans les générateurs thermiques connus utilisant des éléments magnétocaloriques, le générateur est réalisé de manière à être totalement isolé thermiquement par rapport à l'environnement extérieur et les calories ou frigories produites sont récupérées ou prélevées via le fluide caloporteur du générateur mis en circulation dans un ou plusieurs échangeurs thermiques auxquels ce dernier est raccordé. Ce mode de transfert d'énergie ne permet pas de garantir des fonctions thermiques stables et un maintien du gradient de température dans les éléments magnétocaloriques si les conditions extérieures varient et que la quantité d'énergie ainsi prélevée (de manière intentionnelle ou non) dans le fluide caloporteur devient trop importante.

A cet effet, les documents JP 2005 090921, XP025094679 et US 2007/125095 décrivent des générateurs thermiques comportant des éléments magnétocaloriques et des moyens d'échange thermique avec une application extérieure. Toutefois, ces moyens d'échange thermique sont classiques et ne permettent pas de garantir un fonctionnement efficace quelles que soient les conditions d'utilisation.

### Exposé de l'invention :

La présente invention vise à pallier ces inconvénients en proposant un procédé de conception d'un générateur, thermique économiquement rentable, facile à mettre en oeuvre, dont le rendement est garanti et dans lequel le gradient dans chaque élément magnétocalorique est obtenu et maintenu automatiquement.

Dans ce but, l'invention concerne un procédé de conception d'un générateur thermique suivant la revendication1, et un générateur thermique conçu suivant ledit procédé.

### Description sommaire des dessins :

La présente invention sera mieux comprise grâce à la description ci-après qui se rapporte à des modes de réalisation préférés donnés à titre d'exemples non limitatifs et expliqués avec référence aux dessins schématiques annexés, dans lesquels :
- la figure 1A est une vue en élévation frontale et en transparence d'un générateur thermique selon un premier mode de réalisation de l'invention,
- la figure 1B est une vue en coupe selon le plan C-C de la figure 1A,
- la figure 2A est une vue en élévation frontale et en transparence d'un générateur thermique selon un second mode de réalisation de l'invention,
- la figure 2B est une vue en coupe selon le plan B-B de la figure 2A,
- la figure 3A est une vue en élévation frontale et en transparence d'un générateur thermique selon un troisième mode de réalisation de l'invention,
- la figure 3B est une vue en coupe selon le plan D-D de la figure 3A,
- la figure 4A est une vue en élévation frontale et en transparence d'un générateur thermique selon un quatrième mode de réalisation de l'invention,
- la figure 4B est une vue en coupe selon le plan C-C de la figure 4A,
- la figure 4C est une vue en élévation latérale du générateur thermique représenté aux figures 4A et 4B, et
- la figure 4D est une vue en coupe selon le plan E-E de la figure 4C.

### Illustrations de l'invention et différentes manières de la réaliser :

Les figures des dessins annexés représentent un générateur thermique 1, 10, 100, 1000 selon l'invention. Ce dernier est destiné à être relié à au moins une application en vue d'un échange d'énergie thermique avec cette dernière et comporte au moins un module thermique 3, ce module thermique 3 comprenant essentiellement un élément magnétocalorique 4 susceptible d'être traversé par un volume défini de fluide caloporteur entraîné dans le module thermique 3 selon un déplacement alterné entre deux chambres 5, 6 dites chambre chaude et chambre froide disposées de part et d'autre dudit élément magnétocalorique 4, ledit générateur comportant également un arrangement magnétique 7 agencé pour soumettre alternativement chaque élément magnétocalorique 4 à une variation de champ magnétique et créer alternativement dans chaque élément magnétocalorique 4 un cycle d'échauffement et un cycle de refroidissement, entraînant la création et le maintien d'un gradient de température entre les deux extrémités opposées de chaque élément magnétocalorique situées au niveau des chambres 5 (coté le plus chaud de l'élément magnétocalorique) et 6 (coté le plus froid de l'élément magnétocalorique), le déplacement alterné du fluide caloporteur étant synchronisé avec la variation du champ magnétique, et ledit générateur thermique 1, 10, 100, 1000 comportant un moyen 8, 9 de transfert d'énergie thermique entre le liquide caloporteur d'au moins chaque chambre chaude 5 et/ou d'au moins chaque chambre froide 6 et chaque application ou l'environnement extérieur. Le déplacement alterné du fluide caloporteur à l'intérieur de chaque module thermique 3, associé à un cycle d'échauffement et un cycle de refroidissement thermodynamique, appelé également Cycle AMRR (Active Magnetic Refrigeration Regenerator), permet d'augmenter le gradient de température entre les deux extrémités de l'élément magnétocalorique 4 et donc entre les deux chambres 5 et 6.

Le générateur 1, 10, 100, 1000 selon l'invention est réalisé de telle sorte que le transfert d'énergie thermique par l'intermédiaire du moyen 8, 9 est limité volontairement et stabilisé de manière à empêcher une diminution non contrôlée du gradient de température présent dans chaque élément magnétocalorique 4.

Par transfert d'énergie, il faut comprendre échange d'énergie avec l'application destinée à être reliée au générateur thermique 1, 10, 100, 1000 selon l'invention ou avec l'environnement extérieur, le cas échéant. On comprend donc qu'il peut s'agir de l'extraction ou du prélèvement des calories et/ou frigories réalisées par le générateur et stockées dans les chambres chaudes 5 et froides 6 ou de l'absorption de l'énergie thermique de l'application ou de l'environnement.

L'invention propose de rendre le fonctionnement du générateur, et plus précisément son rendement, indépendants de l'application bouclée à ce dernier en limitant et contrôlant les transferts d'énergie entre le fluide caloporteur des chambres chaudes et froides et l'application. Cette limitation et ce contrôle sont réalisés grâce aux différentes interfaces d'échange thermique entre le fluide caloporteur et l'application et notamment par la présence du moyen 8, 9 de transfert configuré de manière à n'autoriser le passage ou le transfert que d'une quantité limitée d'énergie thermique, garantissant ainsi une valeur minimale du gradient thermique de chaque élément caloporteur, dont dépend le rendement thermique du générateur.

Le moyen 8, 9 constitue simultanément un moyen de limitation de la quantité d'énergie pouvant être transférée ou échangée, de manière à ne pas dégrader le système et à conserver au moins une valeur prédéterminée du gradient de température dans chaque élément magnétocalorique 4. Cette valeur dépend notamment des flux thermiques échangés à chaque interface thermique, entre d'une part l'élément magnétocalorique et le fluide caloporteur, d'autre part entre le fluide caloporteur et chaque carter ou moyen de transfert thermiquement conducteur et enfin entre chaque carter ou moyen de transfert thermiquement conducteur et le fluide caloporteur (par exemple : l'air ambiant) assurant le transfert d'énergie entre le générateur thermique et l'application. Cette valeur dépend encore des matériaux utilisés pour la réalisation de chaque élément magnétocalorique 4, des propriétés thermiques de la matière utilisée pour construire chaque moyen de transfert ou carter 2, 2' éventuel, du volume et des propriétés physiques et thermiques du fluide caloporteur choisi.

L'objectif de l'invention est obtenu par la présence du moyen 8, 9 de transfert. Le principe consiste à maîtriser par construction les propriétés des échanges thermiques, d'une part, entre l'élément magnétocalorique et le fluide caloporteur, et, d'autre part, entre le fluide caloporteur du générateur et le fluide caloporteur assurant le transfert d'énergie entre le générateur thermique et l'application (qui peut être par exemple l'air ambiant), en considérant également les échanges avec un éventuel carter thermiquement conducteur disposé entre les chambres et le moyen de transfert d'énergie. Le moyen de transfert d'énergie fonctionne de manière à limiter les transferts d'énergie quelles que soient les conditions extrêmes auxquelles sont soumis les éléments en contact avec le fluide caloporteur de l'application.

Le moyen de transfert 8, 9 d'énergie thermique fonctionne donc à la manière d'un goulot d'étranglement qui régule et limite la quantité d'énergie pouvant être transférée. En d'autres termes, cette quantité d'énergie pouvant être transférée est équivalente à une fuite thermique qui correspond exactement à la puissance utile attendue du générateur thermique 1, 10, 100, 1000 selon l'invention.

Grâce à l'invention, il est possible de limiter et contrôler la quantité d'énergie thermique, donc de calories ou frigories pouvant être transférées au niveau du générateur thermique 1, 10, 100, 1000. De cette manière, une valeur minimale du gradient de température est garantie et maintenue à l'intérieur de chaque module thermique 3. Etant donné que le rendement d'un tel générateur thermique 1, 10, 100, 1000 dépend majoritairement de ce gradient de température, l'invention permet d'optimiser ce rendement. En d'autres termes, le moyen de transfert 8, 9 d'énergie thermique, limitée et stabilisée aux niveaux des interfaces thermiques permet de réduire fortement l'influence extérieure due au prélèvement ou transfert d'énergie thermique au niveau du générateur thermique 1, 10, 100, 1000.

L'élément magnétocalorique 2 peut comprendre un matériau réalisé en partie ou en totalité dans une matière magnétocalorique telle que par exemple du gadolinium (Gd), un alliage de gadolinium comportant du silicium, du Germanium (Ge), du fer (Fe), du magnésium (Mg), du phosphore (P), de l'arsenic (As), ou tout autre matériau équivalent. Ce matériau peut être sous la forme d'un bloc plein, fritté ou poreux, de pastilles, de poudre, d'agglomérat, de morceaux ou sous la forme de tronçons partiellement cylindriques découpés, usinés et/ou moulés dans un matériau magnétocalorique. Le choix du matériau et de sa forme sont faits en fonction des puissances thermiques (caloriques et frigorifiques) recherchées et du gradient de température requis pour assurer les échanges thermiques avec l'application. Chaque élément magnétocalorique 2 est perméable au fluide caloporteur et comporte à cet effet des passages de fluide débouchant qui peuvent être constitués par les pores d'un matériau poreux, des mini ou micro-canaux usinés dans un bloc plein où obtenus par un assemblage de plaques rainurées superposées, par exemple.

Le moyen de transfert d'énergie thermique peut être constitué par au moins un élément structurel 8, 9 disposé au niveau de chaque chambre chaude 5 ou froide 6 de manière à présenter une surface de contact avec la paroi de chaque chambre chaude 5 ou froide 6 pour transférer par conduction et convection thermiques une quantité limitée de calories ou de frigories, et le coefficient global de transmission thermique de chaque élément structurel 8, 9 peut être déterminé en fonction du coefficient de transmission thermique au niveau de chaque interface de transfert thermique située entre chaque élément magnétocalorique 4 et chaque élément structurel 8, 9.

Ces interfaces de transfert thermique sont les suivantes : les surfaces d'échange entre chaque élément magnétocalorique 4 et le fluide caloporteur le ou les traversant, entre le fluide caloporteur et la paroi des chambres chaudes 5 et froides 6, entre la paroi desdites chambres et le moyen de transfert 8, 9 et entre le moyen de transfert 8, 9 et le fluide caloporteur de l'application (par exemple l'air ambiant). Elles participent à la limitation de l'énergie thermique du générateur susceptible d'être échangée avec une application.

Le générateur thermique est relié à au moins une application avec laquelle il est destiné à échanger de l'énergie thermique ce, par l'intermédiaire du moyen 8, 9 de transfert et le coefficient global de transmission thermique du générateur thermique 1, 10, 100, 1000 peut être déterminé en fonction du coefficient de transmission thermique au niveau de l'interface thermique entre chaque élément magnétocalorique 4 et le fluide caloporteur le traversant, entre ledit fluide caloporteur et la paroi de la chambre 5, 6 associée, entre la paroi de chaque chambre 5, 6 et le moyen 8, 9 de transfert correspondant et entre le moyen 8, 9 de transfert et chaque application concernée.

Comme celà est représenté dans l'ensemble des figures, le moyen de transfert d'énergie thermique est destiné à transférer de l'énergie thermique au niveau de chaque chambre chaude 5 et de chaque chambre froide 6 et être constitué par deux éléments structurels 8 et 9 disposés respectivement au niveau de chaque chambre chaude 5 et au niveau de chaque chambre froide 6. Ces éléments structurels 8 et 9 sont alors disposés au niveau des chambres chaudes 5 respectivement froides 6 de manière à présenter une surface de contact avec la paroi de chaque chambre chaude 5, respectivement froide 6 pour transférer par conduction et convection thermiques, de chaque chambre concernée 5, 6, une quantité limitée et contrôlée d'énergie thermique. Ces éléments structurels 8 et 9 permettent donc de transférer une quantité limitée de calories et frigories issues des chambres 5 et 6. Le ou les matériaux constitutifs de ces éléments structurels 8, 9 ainsi que leur forme ou configuration seront, bien entendu, choisis en fonction des performances du générateur thermique 1, 10, 100, 1000 et de la valeur du gradient de température devant être conservée.

Dans l'invention, le moyen 8, 9 de transfert garantit le rendement du générateur thermique 1, 10, 100, 1000 selon l'invention. Quelle que soit la demande de transfert ou d'échange thermique requise par l'application extérieure liée audit générateur thermique 1, 10, 100, 1000, cette demande ne sera satisfaite que dans la mesure où elle n'a pas d'influence, ni ne dégrade le gradient de température présent dans chaque module thermique 3.

En effet, si le gradient thermique au sein des modules thermiques 3 se dégrade, voire s'annule, le rendement thermique du générateur thermique est nul. Il est nécessaire de ré-établir ce gradient thermique pour pouvoir produire à nouveau de l'énergie thermique et la fournir à l'extérieur du générateur thermique 1, 10, 100, 1000. Dans tous les cas, le moyen de transfert d'énergie est conçu de manière à contrôler intrinsèquement et encadrer automatiquement, par des valeurs limites dépendant des différents coefficients d'échange entre les différentes interfaces disposées en série entre le matériau magnétocalorique et l'application extérieur, la quantité d'énergie thermique susceptible d'être échangée. Cette quantité d'énergie disponible (interne) est, bien entendu, déterminée selon l'invention lors de la conception du générateur 1, 10, 100, 1000, en fonction de ses caractéristiques, à savoir notamment de la nature et de la quantité de l'élément magnétocalorique 2, du fluide caloporteur et du type de champ magnétique généré par l'arrangement magnétique 7.

En d'autres termes, l'on maîtrise la chaine (en série) d'échanges thermiques (et de coefficients d'échange) aux différentes interfaces d'échange thermique (élément magnétocalorique 4/fluide caloporteur, fluide caloporteur/paroi de la chambre 5, 6 concernée, paroi de ladite chambre 5, 6/élément structurel 8, 9 et élément structurel 8, 9/milieu d'échange thermique de l'application extérieures) afin de contrôler le flux thermique à travers le générateur thermique 1, 10, 100, 1000. Pour ce faire, ces différents coefficient d'échanges « h » sont ajustés entre eux par paires associées en série, c'est-à-dire qu'ils sont choisis de telle sorte que la quantité d'énergie thermique susceptible d'être échangée avec l'application extérieure est limitée, à savoir comprise dans un intervalle de valeurs prédéfinies.

Cette configuration préserve le gradient thermique de l'appareil, même si les conditions externes varient très fortement. Un équilibre thermique se créera pour aboutir, d'un coté de la chaîne d'échanges thermiques, à la température externe de l'élément structurel 8, 9 (surface externe dudit élément structurel) et, de l'autre coté de la chaîne, à la température de l'extrémité de l'élément magnétocalorique 4 consistant en la valeur de température extrême (côté chaud ou froid) du gradient thermique.

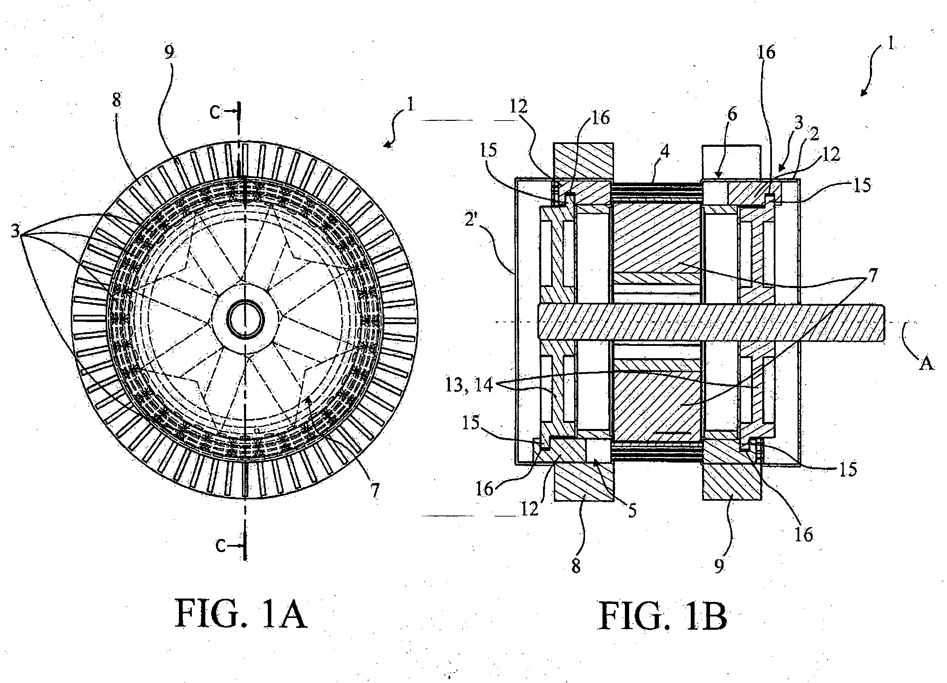

Selon l'invention, au moins un élément structurel 8, 9 peut être sous la forme d'un anneau massif dont au moins une partie de la surface est en contact avec la paroi de la chambre concernée 5, 6. Un tel anneau est notamment représenté sur les figures 1A et 1B. Des matériaux susceptibles de convenir à la réalisation d'un tel anneau massif ou plein sont des matériaux choisis notamment en fonction de leur conductivité thermique. On peut citer à cet effet les aciers et aciers inoxydables, les polymères ou polymères chargés, l'aluminium, le laiton, le cuivre, etc. Afin d'éviter une interaction avec le champ magnétique dans le générateur 1, 10, 100, 1000, les matériaux choisis sont, de préférence, amagnétiques.

En variante ou de manière additionnelle, il peut également être prévu qu'au moins un élément structurel 8, 9 peut être réalisé sous la forme d'un anneau muni d'ailettes.

Comme cela ressort des figures annexées, l'élément structurel 8, 9 et l'extrémité concernée de l'élément magnétocalorique 4 sont disposées dans un voisinage restreint. Cette proximité permet d'augmenter l'efficacité du générateur thermiques et évite d'avoir recours à l'installation de grandes longueurs de canalisations qui pénalisent l'échange thermique et l'efficacité du système. Cette configuration permet ainsi le fonctionnement du générateur thermique à des fréquences alternées élevées et d'obtenir une maîtrise de la puissance thermique. En d'autres termes, cela consiste à limiter l'appel thermique issu de l'application extérieure qui pourrait dégrader (s'il n'y avait pas de contrôle des différents échanges thermiques) le gradient thermique du générateur thermique magnétocalorique. L'invention permet d'obtenir rapidement à la fois un gradient thermique (« span » en anglais) stable et élevé et un échange thermique avec l'application qui se comporte comme une diode de régulation électronique (diode Zener) et qui stabilise la différence de température entre les deux extrémités de la chaîne d'échanges thermiques.

Les figures 1A et 1B représentent ainsi un premier mode de réalisation de l'invention dans lequel le générateur thermique 1 comprend un élément structurel 8 sous la forme d'un anneau massif (représenté à gauche sur la figure 1B) et un élément structurel 9 sous la forme d'un anneau muni d'ailettes (représenté à droite sur la figure 1 B).

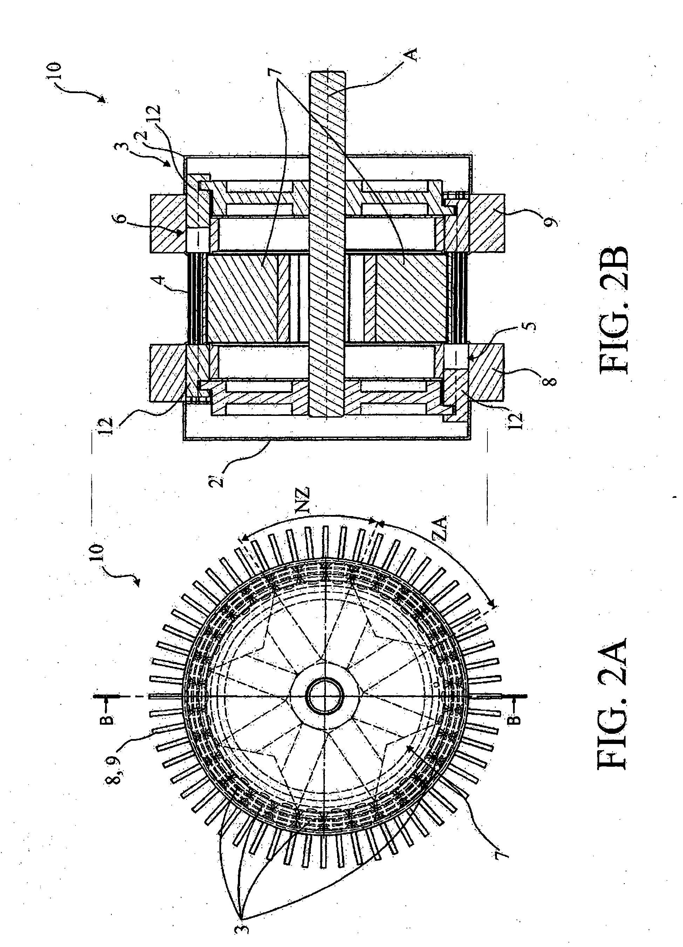

Les figures 2A et 2B représentent quant à elles un mode de réalisation du générateur thermique 10 dans lequel les deux éléments structurels 8 et 9 formant le moyen de transfert d'énergie thermique au niveau des chambres chaude 5 et froide 6 comprennent des anneaux. Dans cette configuration circulaire du générateur thermique 10, ces anneaux s'étendent radialement.

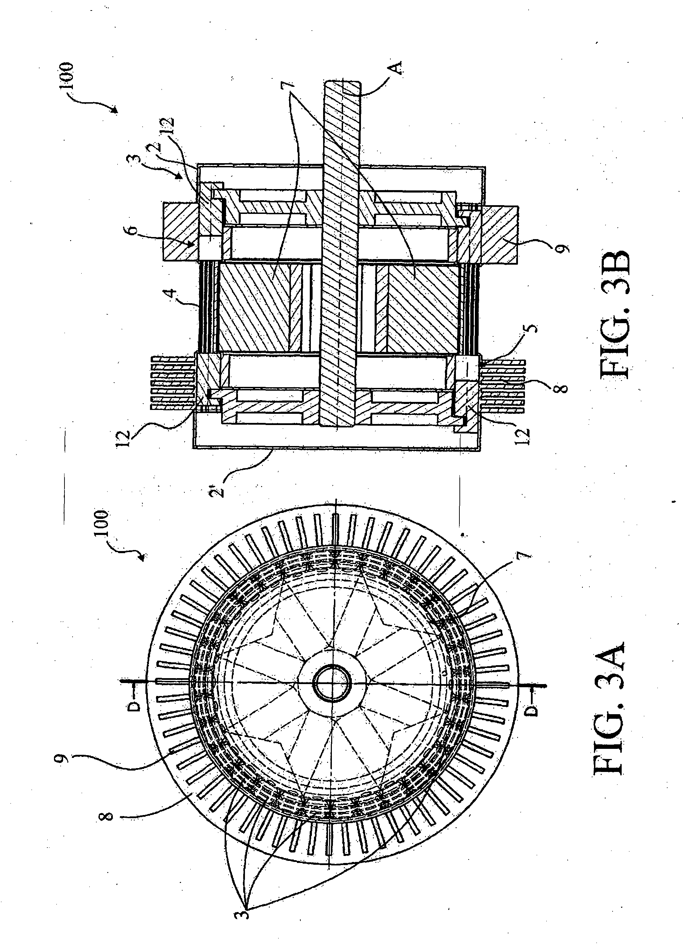

Les figures 3A et 3B représentent un élément structurel 8 (à gauche sur la figure 3B) comportant des ailettes circulaires, sous la forme d'anneaux concentriques autour de l'axe A du générateur thermique 100 et un élément structurel 9 (représenté à droite sur la figure 3B) comportant des ailettes s'étendant radialement.

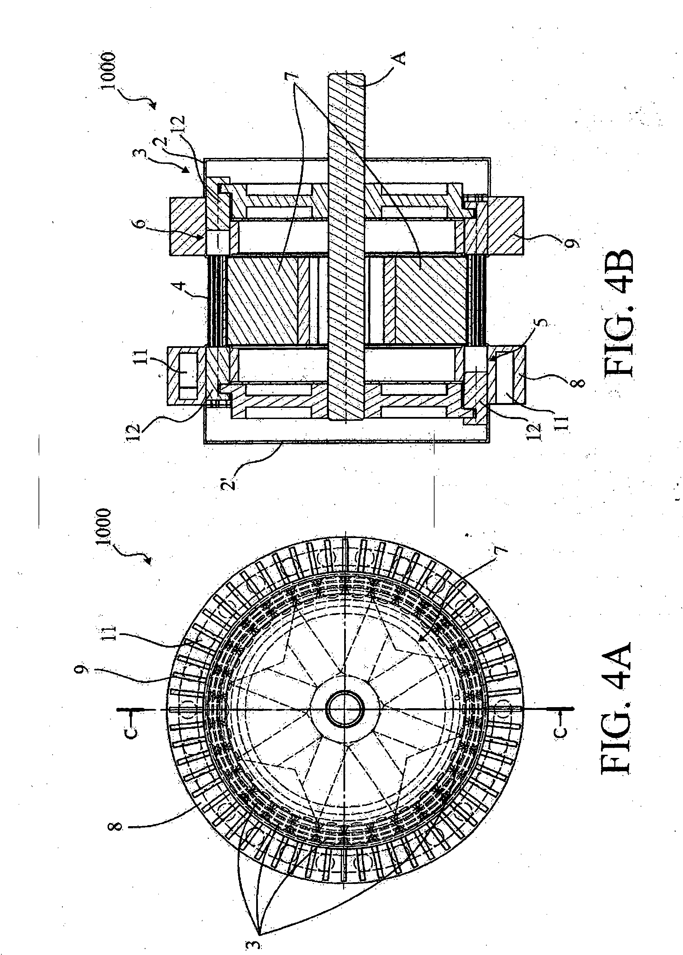

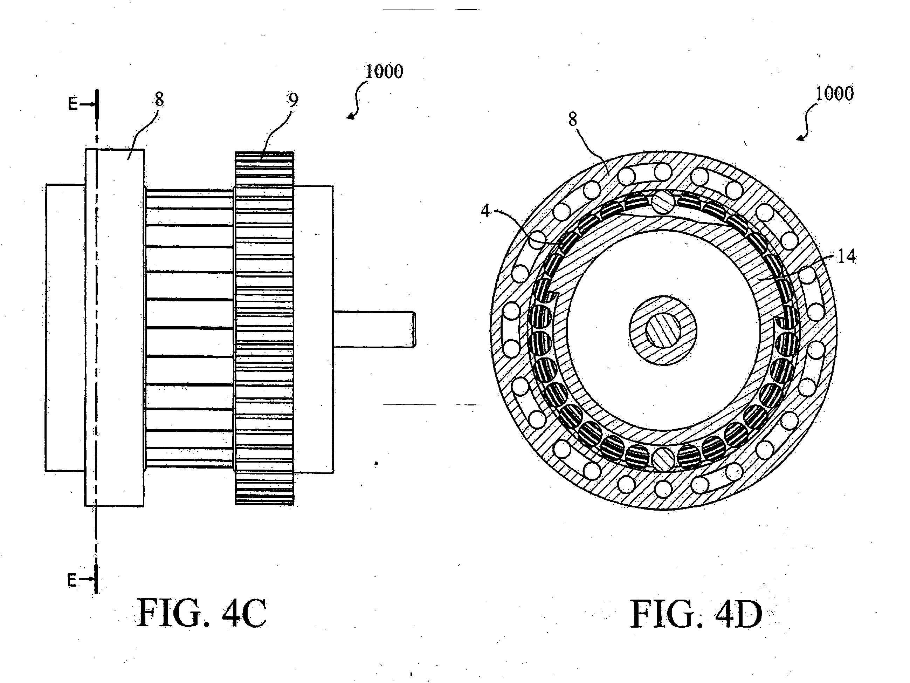

L'invention prévoit également qu'au moins un élément structurel 8, 9 peut comprendre un chemin de circulation 11 d'un fluide caloporteur. Un générateur 1000 comportant un tel élément structurel 8 est représenté sur les figures 4A à 4C. Il est associé à un second élément structurel 9 comprenant des ailettes radiales.

Bien entendu, en fonction de l'application et de puissance thermique à fournir, le générateur thermique 1, 10, 100, 1000 peut comporter un ou plusieurs modules thermiques 3. Ces derniers sont alors disposés de manière adjacente les uns aux autres. L'avantage inhérent à l'implantation de plusieurs modules thermiques est l'obtention d'une puissance plus importante, proportionnelle au nombre de modules thermiques, étant donné que le moyen 8, 9 transfert de l'énergie au niveau de plusieurs chambres 5, 6.

Selon une première variante de réalisation du générateur thermique 1, 10, 100, 1000, ce dernier peut comporter plusieurs modules thermiques 3 disposés de manière adjacente en cercle autour d'un axe central A et l'arrangement magnétique 7 peut être concentrique à cet axe central et entraîné en rotation autour de ce dernier. L'ensemble des figures des dessins annexés représentent cette variante de réalisation. Le nombre de modules thermiques 3 n'est pas limitatif et est déterminé en fonction de l'application donnée.

Dans le mode de réalisation du moyen 8, 9 dans lequel au moins un des éléments structurels le composant comporte des ailettes, ces dernières peuvent s'étendre radialement autour des chambres 5, 6, ou encore circulairement autour de ces dernières. L'élément structurel 9 représenté à droite sur les figures 1B, 3B et 4B et les deux éléments structurels 8 et 9 du générateur thermique de la figure 2B comportent des ailettes s'étendant radialement, alors que l'élément structurel représenté à gauche sur la figure 3B comporte des ailettes circulaires, sous la forme d'anneaux concentriques autour de l'axe A du générateur thermique 100. Bien entendu, le générateur thermique selon l'invention peut comprendre deux éléments structurels 8 et 9 identiques ou non, et réalisés selon l'un quelconque des modes de réalisation décrits. Le choix de la structure des éléments structurels sera dicté par les contraintes du type encombrement, implantation dans l'application finale, coût de revient, conductivité et diffusion thermiques intrinsèques desdits éléments structurels.

Selon une seconde variante non représentée du générateur thermique 1, 10, 100, 1000, ce dernier peut comporter plusieurs modules thermiques 3 alignés et disposés de manière adjacente et l'arrangement magnétique 7 peut être entraîné en translation alternative le long desdits modules thermiques 3.

En ce qui concerne le mode de montage ou de fixation du moyen 8, 9 de transfert d'énergie thermique, selon une première variante, le générateur thermique peut comporter deux carters 2, 2' thermiquement conducteurs intégrant chacun chaque chambre chaude 5, respectivement chaque chambre froide 6, et disposés de part et d'autre de chaque élément magnétocalorique 4 et au moins un élément structurel 8, 9 peut être fixé sur un carter 2, 2' du générateur thermique 1, 10, 100, 1000.

Selon une seconde variante, le générateur thermique peut comporter deux carters 2, 2' thermiquement conducteurs intégrant chacun chaque chambre chaude 5, respectivement chaque chambre froide 6, et disposés de part et d'autre de chaque élément magnétocalorique 4 et au moins un élément structurel 8, 9 peut être d'un seul tenant avec un carter 2, 2' du générateur-thermique 1, 10, 100, 1000. Lorsqu'un élément structurel 8, 9 est fixé sur la carter 2, 2' du générateur thermique 1, 10, 100, 1000, cette fixation peut être réalisée par collage, soudure, brasage ou tout autre moyen analogue

Pour permettre de faire circuler le fluide caloporteur dans chaque module thermique 3 selon un mouvement de va-et-vient d'une chambre 5, 6 à l'autre 6, 5 en traversant à chaque fois l'élément magnétocalorique 4 situé entre les deux chambres 5, 6, chaque module thermique 3 peut intégrer des moyens de circulation 12 entraînant le déplacement alterné du fluide caloporteur, d'une chambre à l'autre à travers l'élément magnétocalorique 4.

De manière avantageuse, et comme cela ressort plus particulièrement des figures 1B, 2B, 3B et 4B, ces moyens de circulation 12 peuvent être sous la forme d'une paire de pistons situés de part et d'autre de l'élément magnétocalorique 4 et animés d'un mouvement synchronisé de translation alternée par un mécanisme d'entraînement 13. Le mécanisme d'entraînement 13 peut, quant à lui, comporter au moins une came de commande 14 entraînée par un actionneur et comportant un profil de came 15 de forme sensiblement sinusoïdale, dont l'amplitude détermine la course des pistons 12 et dont la phase sinusoïdale correspond globalement à un cycle d'échauffement et un cycle de refroidissement de chaque élément magnétocalorique 4. Ainsi, chaque piston 12 pousse un volume calibré du fluide caloporteur contenu dans le module thermique 3 concerné au travers de l'élément magnétocalorique 4 dans un sens de circulation selon que ledit élément magnétocalorique 4 subit un cycle d'échauffement ou dans le sens opposé lors d'un cycle de refroidissement. Ces pistons 12 sont de préférence alignés et situés dans l'axe de l'élément magnétocalorique 4 et se déplacent selon un sens identique, et leurs logements forment une chambre 5, 6. Le profil de came 15 forme une nervure saillante logée dans une gorge 16 correspondante de chaque piston 12.

Dans le cas d'un générateur thermique 1, 10, 100, 1000 de forme circulaire, tel que celui représenté dans l'ensemble des figures annexées, qui comporte deux cames de commande 14, ces dernières peuvent présenter une forme annulaire et être entraînées en rotation continue ou non autour de l'axe central A par un moteur électrique ou tout actionneur équivalent.

Dans le cas d'un générateur thermique de forme linéaire (non représenté), les cames sont rectilignes et animées d'un mouvement de translation alternative.

Toujours dans le cas d'un générateur thermique 1, 10, 100, 1000 circulaire, dans lequel les modules thermiques 3 sont agencés circulairement autour d'un axe central A, il peut être prévu que l'arrangement magnétique 7 soit formé de zones aimantées ZA et de zones non aimantées NZ alternées et soit couplé à un actionneur pour être mobile par rapport aux éléments magnétocaloriques 4 et chaque couple formé par une zone aimantée ZA et une zone non aimantée NZ peut s'étendre sur une distance correspondant globalement à une sinusoïde du profil de came 15. La zone aimantée ZA génère ainsi un cycle d'échauffement de chaque élément magnétocalorique 4 et la zone non aimantée NZ un cycle de refroidissement. L'actionneur peut être un moteur électrique ou tout autre actionneur équivalent susceptible d'entraîner l'arrangement magnétique 7 en rotation autour de l'axe central A. Dans les exemples illustrés, l'arrangement magnétique 7 comporte quatre couples formés chacun par une zone aimantée ZA et une zone non aimantée NZ, et s'étendant sur un secteur angulaire de 90° et le profil de came 15 comporte en correspondance également quatre sinusoïdes s'étendant chacune sur le même secteur angulaire.

Le fluide caloporteur utilisé est de préférence liquide. On choisira une composition chimique du fluide caloporteur adaptée à la plage de température voulue afin d'obtenir un échange thermique maximal. Ce fluide peut donc être liquide, gazeux ou diphasique. S'il est liquide, on utilisera par exemple de l'eau pure pour des températures positives et de l'eau additionnée d'antigel, par exemple un produit glycolé ou une saumure pour des températures négatives.

Grâce au procédé selon l'invention, il est donc possible de réaliser un générateur thermique 1, 10, 100, 1000 dont le rendement est garanti et n'est pas influencé par le circuit extérieur d'utilisation. Un tel générateur thermique 1, 10, 100, 1000 peut trouver une application aussi bien industrielle que domestique dans le domaine du chauffage, de la climatisation, du tempérage, refroidissement ou autres, ce, à des coûts compétitifs et dans un faible encombrement.

### Possibilités d'application industrielle :

En outre, toutes les pièces composant ce générateur thermique 1, 10, 100, 1000 peuvent être réalisées selon des processus industriels reproductibles.

## Revendications

1. Procédé de conception d'un générateur thermique (1, 10, 100, 1000) destiné à être relié à au moins une application extérieure en vue d'un échange d'énergie thermique avec cette dernière, ledit générateur comportant au moins un module thermique (3), ce module thermique (3) comprenant essentiellement un élément magnétocalorique (4) susceptible d'être traversé par un volume défini de fluide caloporteur entraîné dans le module thermique (3) selon un déplacement alterné entre deux chambres (5, 6) dites chambre chaude et chambre froide disposées de part et d'autre dudit élément magnétocalorique (4), ledit générateur comportant également un arrangement magnétique (7) agencé pour soumettre alternativement chaque élément magnétocalorique (4) à une variation de champ magnétique et créer alternativement dans chaque élément magnétocalorique (4) un cycle d'échauffement et un cycle de refroidissement, entraînant la création et le maintien d'un gradient de température entre les deux extrémités opposées de chaque élément magnétocalorique (4) situées au niveau des chambres (5, 6), le déplacement alterné du fluide caloporteur étant synchronisé avec la variation du champ magnétique, et ledit générateur thermique (1, 10, 100, 1000) comportant un moyen (8, 9) de transfert d'énergie thermique entre le fluide caloporteur d'au moins chaque chambre chaude (5) et/ou d'au moins chaque chambre froide (6) et chaque application du l'environnement extérieur, procédé **caractérisé en ce que** les coefficients d'échange thermique entre les différentes interfaces d'échange thermique (élément magnétocalorique 4/fluide caloporteur - fluide caloporteur/paroi de la chambre 5,6 - paroi de ladite chambre 5,6/moyen de transfert 8, 9 et moyen de transfert 8,9/milieu d'échange thermique de l'application ou de l'environnement extérieur) sont ajustés entre eux par paires associées en série de telle sorte que la quantité d'énergie thermique susceptible d'être échangée avec l'application ou l'environnement extérieur est limitée de façon à préserver le gradient thermique dans chaque module thermique (3) et à ce que la demande d'échange thermique requise par l'application ou l'environnement extérieur ne soit satisfaite que dans la mesure où elle n'influence ni ne dégrade le gradient de température présent dans chaque module thermique (3).

2. Générateur thermique conçu suivant le procédé de la revendication 1, **caractérisé en ce que** le moyen de transfert d'énergie thermique comporte au moins un élément structurel (8, 9) présentant une surface de contact avec la paroi de chaque chambre chaude (5) ou froide (6)

3. Générateur thermique, selon la revendication 2, **caractérisé en ce que** le moyen (8, 9) de transfert est destiné à transférer de l'énergie thermique au niveau de chaque chambre chaude (5) et de chaque chambre froide (6) et est constitué par deux éléments structurels (8 et 9) disposés respectivement au niveau de chaque chambre chaude (5) et au niveau de chaque chambre froide (6).

4. Générateur thermique, selon l'une quelconque des revendications 2 à 3, **caractérisé en ce qu'**au moins un élément structurel (8, 9) formant le moyen de transfert est sous la forme d'un anneau massif dont au moins une partie de la surface est en contact avec la paroi de la chambre concernée (5, 6).

5. Générateur thermique, selon l'une quelconque des revendications 2 à 4, **caractérisé en ce qu'**au moins un élément structurel (8, 9) formant le moyen de transfert est réalisé sous la forme d'un anneau muni d'ailettes.

6. Générateur thermique, selon l'une quelconque des revendications 2 à 5, **caractérisé en ce qu'**au moins un élément structurel (8, 9) formant le moyen de transfert comprend un chemin de circulation (11) d'un fluide caloporteur.

7. Générateur thermiques, selon l'une quelconque des revendications 2 à 6, **caractérisé en ce qu'**il comporte plusieurs modules thermiques (3) disposés de manière adjacente en cercle autour d'un axe central (A) et **en ce que** l'arrangement magnétique (7) est concentrique à cet axe central et entraîné en rotation autour de ce dernier.

8. Générateur thermique, selon les revendications 5 et 7, **caractérisé en ce que** les ailettes s'étendent radialement autour des chambres (5, 6).

9. Générateur thermique, selon les revendications 5 et 7, **caractérisé en ce que** les ailettes s'étendent circulairement autour des chambres (5, 6).

10. Générateur thermique, selon l'une quelconque des revendications 2 à 6, **caractérisé en ce que en ce qu'**il comporte plusieurs modules thermiques (3) alignés et disposés de manière adjacente et **en ce que** l'arrangement magnétique (7) est entraîné en translation alternative le long desdits modules thermiques (3).

11. Générateur thermiques, selon l'une quelconque des revendications 2 à 10, caractérisé en ce ue chaque module thermique (3) intègre des moyens de circulation (12) entraînant le déplacement alterné du fluide caloporteur, d'une chambre à l'autre à travers l'élément magnétocalorique (4).

12. Générateur thermique, selon la revendication 11, **caractérisé en ce que** les moyens de circulation (12) sont sous la forme d'une paire de pistons situés de part et d'autre de l'élément magnétocalorique (4) et animés d'un mouvement de translation alterné par un mécanisme d'entraînement (13).

13. Générateur thermique, selon la revendication 12, **caractérisé en ce que** le mécanisme d'entraînement (13) comporte au moins une came de commande (14) entraînée par un actionneur, et comportant un profil de came (15) de forme sensiblement sinusoïdale, dont l'amplitude détermine la course des pistons (12) et dont la phase sinusoïdale correspond globalement à un cycle d'échauffement et un cycle de refroidissement de chaque élément magnétocalorique (4).

## Patentansprüche

1. Verfahren zum Gestalten eines Wärmegenerators (1, 10, 100, 1000), der dazu bestimmt ist, mit zumindest einer externen Anwendung verbunden zu werden um mit dieser Wärmeenergie auszutauschen, wobei besagter Generator zumindest ein Wärmemodul (3) beträgt, wobei dieses Wärmemodul (3) im Wesentlichen aus einem magnetokalorischen Element (4) besteht, das von einem festgelegten Volumen Wärmeübertragungsfluid durchflossen werden kann, welches im Wärmemodul (3) zwischen zwei beidseitig des besagten magnetokalorischen Elements (4) angeordnete, als kalte Kammer und warme Kammer bezeichnete Kammern (5, 6) hin und her zirkuliert, wobei besagter Generator ebenfalls eine magnetische Anordnung (7) beträgt, die ausgelegt ist, um abwechselnd jedes magnetokalorische Element (4) einer Variation des Magnetfelds auszusetzen und abwechselnd in jedem magnetokalorischen Element (4) einen Heiz-Zyklus und einen Kühl-Zyklus zu erzeugen, wodurch ein TemperaturGradient zwischen den beiden bei den Kammern (5, 6) befindlichen entgegen gesetzten Enden jedes magnetokalorischen Elements (4) erzeugt und beibehalten wird, wobei die Hin-und-Her-Bewegung des Wärmeübertragungsfluids mit der Variation des Magnetfeldes synchronisiert ist, und besagter Wärmegenerator (1, 10, 100, 1000) ein Mittel (8, 9) zur Übertragung der Wärmeenergie zwischen dem Wärmeübertragungsfluid von zumindest jeder warmen Kammer (5) und/oder von zumindest jeder kalten Kammer (6) und jeder Anwendung oder die externe Umgebung beträgt, **dadurch gekennzeichnete**s Verfahren, dass die Wärmeaustauschkoeffizienten zwischen den verschiedenen Wärmeaustausch-Schnittstellen (magnetokalorisches Element 4/Wärmeübertragungsfluid - Wärmeübertragungsfluid/Wand der Kammer 5, 6 - Wand der besagten Kammer 5, 6/Übertragungsmittel 8, 9 und Übertragungsmittel 8, 9/Wärmeaustausch-Umfeld der Anwendung oder der externen Umgebung) untereinander in seriell zusammenarbeitenden Paaren so angepasst sind, dass die mit der Anwendung oder der externen Umgebung austauschbare Menge Wärmeenergie beschränkt ist, um den Wärmegradienten in jedem Wärmemodul (3) zu erhalten, und dass der von der Anwendung oder der externen Umgebung benötigte Bedarf an Wärmeenergie nur insofern erfüllt wird, als er den in jedem Wärmemodul (3) vorhandene Temperaturgradienten weder beeinflusst noch verschlechtert.

2. Wärmegenerator, gestaltet nach dem Verfahren von Anspruch 1, **dadurch gekennzeichnet, dass** das Mittel zur Übertragung der Wärmeenergie zumindest ein strukturelles Element (8, 9) beträgt, das eine Kontaktfläche mit der Wand jeder warmen (5) oder kalten (6) Kammer aufweist.

3. Wärmegenerator nach Anspruch 2, **dadurch gekennzeichnet, dass** das Mittel (8, 9) zur Übertragung dazu bestimmt ist, Wärmeenergie bei jeder warmen Kammer (5) und bei jeder kalten Kammer (6) zu übertragen, und aus zwei strukturellen Elementen (8, 9) besteht, die bei jeder warmen Kammer (5) bzw. bei jeder kalten Kammer (6) angeordnet sind.

4. Wärmegenerator nach einem beliebigen der Ansprüche 2 bis 3, **dadurch gekennzeichnet, dass** zumindest ein strukturelles Element (8, 9), das das Mittel zur Übertragung bildet, die Form eines massiven Rings aufweist, von dem zumindest ein Teil der Fläche mit der Wand der betroffenen Kammer (5, 6) in Berührung ist.

5. Wärmegenerator nach einem beliebigen der Ansprüche 2 bis 4, **dadurch gekennzeichnet, dass** zumindest ein strukturelles Element (8, 9), das das Mittel zur Übertragung bildet, die Form eines Rings mit Rippen aufweist.

6. Wärmegenerator nach einem beliebigen der Ansprüche 2 bis 5, **dadurch gekennzeichnet, dass** zumindest ein strukturelles Element (8, 9), das das Mittel zur Übertragung bildet, ein Zirkulationsstrecke (11) für ein Wärmeübertragungsfluid aufweist.

7. Wärmegenerator nach einem beliebigen der Ansprüche 2 bis 6, **dadurch gekennzeichnet, dass** er mehrere kreisförmig um eine Mittelachse (A) aneinander angeordnete Wännemodule (3) aufweist, und dadurch, dass die magnetische Anordnung (7) konzentrisch zu dieser Mittelachse angeordnet ist und drehend um diese angetrieben wird.

8. Wärmegenerator nach Ansprüche 5 und 7, **dadurch gekennzeichnet, dass** die Rippen sich radial um die Kammern (5, 6) herum erstrecken.

9. Wärmegenerator nach Ansprüche 5 und 7, **dadurch gekennzeichnet, dass** die Rippen sich kreisförmig um die Kammern (5, 6) herum erstrecken.

10. Wärmegenerator nach einem beliebigen der Ansprüche 2 bis 6, **dadurch gekennzeichnet, dass** er mehrere in einer Reihe aneinander angeordnete Wärmemodule (3) aufweist, und dadurch, dass die magnetische Anordnung (7) in einer linearen Hin-und-Her-Bewegung entlang der besagten Wärmemodule (3) angetrieben wird.

11. Wärmegenerator nach einem beliebigen der Ansprüche 2 bis 10, **dadurch gekennzeichnet, dass** jedes Wärmemodul (3) Zirkulationsmittel (12) beträgt, die das Wärmeübertragungsfluid abwechselnd hin und her bewegen, von einer Kammer zur anderen, durch das magnetokalorische Element (4) hindurch.

12. Wärmegenerator nach Anspruch 11, **dadurch gekennzeichnet, dass** die Zirkulationsmittel (12) aus einem Paar Kolben bestehen, die beidseitig des magnetokalorischen Elements (4) angeordnet sind und durch einen Antriebsmechanismus (13) in einer abwechselnden Hin-und-Her-Bewegung angetrieben werden.

13. Wärmegenerator nach Anspruch 12, **dadurch gekennzeichnet, dass** der Antriebsmechanismus (13) zumindest eine von einem Antrieb angetriebene Steuerkurve (14) aufweist, die ein im Wesentlichen sinusfönniges Steuerprofil (15) aufweist, dessen Amplitude den Hub der Kolben (12) bestimmt und dessen Sinusphase global einem Heiz- und einem Kühl-Zyklus jedes magnetokalorischen Elements (4) entspricht.

## Claims

1. Method of designing a thermal generator (1, 10, 100, 1000) intended to be connected with at least one external application for a thermal energy exchange with the latter, said generator including at least one thermal module (3), this thermal module (3) comprising essentially a magnetocaloric element (4) through which a defined volume of heat transfer fluid can flow, which is circulated in the thermal module (3) according to a reciprocating displacement between two chambers (5, 6) called hot chamber and cold chamber, arranged on either side of said magnetocaloric element (4), said generator comprising also a magnetic arrangement (7) arranged to subject alternately every magnetocaloric element (4) to a variation of the magnetic field and create alternately in every magnetocaloric element (4) a heating cycle and a cooling cycle, leading to the creation and holding of a temperature gradient between the two opposite ends of every magnetocaloric element (4) located close to the chambers (5, 6), the reciprocating circulation of the heat transfer fluid being synchronized with the variation of the magnetic field and said thermal generator (1, 10, 100, 1000) comprising a means (8, 9) for transferring thermal energy between the heat transfer fluid of at least every hot chamber (5) and/or at least every cold chamber (6) and every application or the external environment, method **characterized in that** the heat exchange coefficients between the various heat exchange interfaces (magnetocaloric element 4/heat transfer fluid - heat transfer fluid/wall of chamber 5, 6 - wall of said chamber 5, 6/transfer means 8, 9 and transfer means 8, 9/heat exchange medium of the application or of the external environment) are adjusted serially in associated pairs so that the quantity of thermal energy liable to be exchanged with the application or with the external environment is limited in order to preserve the thermal gradient in every thermal module (3) and so that the thermal exchange demand of the application or the external environment is met only insofar it does neither influence nor reduce the temperature gradient present in every thermal module (3).

2. Thermal generator designed according to the method of claim 1, **characterized in that** the thermal energy transfer means comprises at least one structural element (8, 9) having a contact surface with the wall of every hot (5) or cold (6) chamber.

3. Thermal generator according to claim 2, **characterized in that** the transfer means (8, 9) is intended for transferring thermal energy at the level of every hot chamber (5) and of every cold chamber (6) and is made of two structural elements (8 and 9) arranged respectively at the level of every hot chamber (5) and at the level of every cold chamber (6).

4. Thermal generator according to any of claims 2 to 3, **characterized in that** at least one structural element (8, 9) forming the transfer means has the shape of a massive ring of which at least a part of the surface is in contact with the wall of the concerned chamber (5, 6).

5. Thermal generator according to any of claims 2 to 4, **characterized in that** at least one structural element (8, 9) forming the transfer means has the shape of a ring provided with fins.

6. Thermal generator according to any of claims 2 to 5, **characterized in that** at least one structural element (8, 9) forming the transfer means comprises a circulation path (11) of a heat transfer fluid.

7. Thermal generator according to any of claims 2 to 6, **characterized in that** it comprises several thermal modules (3) arranged adjacently in a circle around a central axis (A) and **in that** the magnetic arrangement (7) is concentric to this central axis and driven in rotation around the latter.

8. Thermal generator according to claims 5 and 7, **characterized in that** the fins extend radially around the chambers (5, 6).

9. Thermal generator according to claims 5 and 7, **characterized in that** the fins extend circularly around the chambers (5, 6).

10. Thermal generator according to any of claims 2 to 6, **characterized in that** it comprises several thermal modules (3) arranged adjacently on a line and **in that** the magnetic arrangement (7) is driven in a reciprocating translation along said thermal modules (3).

11. Thermal generator according to any of claims 2 to 10, **characterized in that** every thermal module (3) includes circulation means (12) that ensure the reciprocating displacement of the heat transfer fluid from one chamber to the other through the magnetocaloric element (4).

12. Thermal generator according to claim 11, **characterized in that** the circulation means (12) are formed by a pair of pistons located on either side of the magnetocaloric element (4) and driven in a reciprocating translation movement by a driving mechanism (13).

13. Thermal generator according to claim 12, **characterized in that** the driving mechanism (13) comprises at least one guide curve (14) driven by an actuator and including a guiding profile (15) with a substantially sinusoidal shape whose amplitude determines the stroke of the pistons (12) and whose sinusoidal phase globally corresponds to a heating cycle and a cooling cycle of every magnetocaloric element (4).
